# DEMANDE DE BREVET EUROPEEN

(11) **EP 1 634 858 A1**
(43) Date de publication de la demande: **15.03.2006**
(21) Numéro de dépôt: 04405575.4
(22) Date de dépôt: 13.09.2004
(51) Int. Cl.: C04B 28/02, C04B 28/12

(54) **Beton hydraulique**

(71) Demandeur: Losinger Construction S.A., 3000 Berne (CH)
(72) Inventeur: Mermoud, Bertrand, 1202 Geneve (CH); Moukhliss, Hanane, 1947 Anieres (CH)
(74) Mandataire: Moinas, Michel

(57) **Abrégé**

Béton constitué de granulats de granulométrie étagée mélangés à un liant hydraulique, et dont la composition desdits granulats comprend des agrégats bitumineux.

## Description

La présente invention a pour objet un béton constitué de granulats, de granulométrie étagée ou continue, mélangés à un liant hydraulique.

Il existe de nombreux types de bétons parmi lesquelles on distingue essentiellement deux grands groupes qui se différentient notamment en fonction de leur usage. Dans le domaine des routes et chaussées, cet usage se réfère à la construction de revêtements pour la circulation routière, et dans le domaine du bâtiment et du génie civil, il a trait à la construction d'ouvrages d'art, de gros-oeuvres et d'habitations. Généralement, les matériaux utilisés pour le revêtement des chaussées sont des bétons bitumineux, alors que ceux de la deuxième catégorie sont des bétons hydrauliques, essentiellement des bétons de ciment. Le constituant fondamental qui permet de différentier ces deux types de bétons est le liant. Ce dernier a pour fonction d'agglomérer les différents granulats pour en former un agrégat. Le liant, ou pâte liante, est la partie dite active qui permet le collage des grains inertes que sont les granulats. Les bétons bitumineux ont généralement pour liant du bitume, de l'asphalte ou une émulsion de bitume alors que les granulats des bétons hydrauliques sont essentiellement liés par du ciment, de la chaux ou par un autre mélange composé d'un minéral et d'eau.

Les granulats qui constituent la partie dite inerte ou quasi inerte de tous les bétons sont généralement des pierrailles, de la grave naturelle, des roches dures concassées, des graviers ou gravillon, des sables et des fines appelées également fillers. La composition granulométrique de l'agrégat est définie dans le but d'obtenir un matériau de compacité maximum. Cette granulométrie est donc généralement étagée, voire continue. Une meilleure continuité de la granulométrie aura un effet bénéfique sur la consistance du béton. L'origine des différents granulats peut être naturelle ou artificielle comme les produits ou sous-produits de l'industrie expansés par traitement thermique. Outre le type de roche, les granulats sont également caractérisés par leur masse volumique et leur géométrie allant d'une angularité prononcée à des formes bien arrondies.

Les proportions et choix des granulats, le dosage du ciment, la quantité d'eau de gâchage fonction du rapport eau/ciment (e/c), les éventuels adjuvants ou additifs, le malaxage du mélange et la quantité d'air emprisonnée lors du malaxage confèrent au béton de nombreux paramètres qu'il convient de connaître et de bien maîtriser pour obtenir toutes les propriétés recherchées, caractéristiques du résultat final.

L'élaboration des bétons est une science dont le produit a une durée de vie limitée. Dans le domaine des routes et chaussées, ces dernières subissent les assauts du trafic, du temps et des intempéries. Elles ne peuvent donc pas être conçues pour durer indéfiniment. La démolition des chaussées engendre des plaques ou des fraisats d'enrobés, c'est à dire des granulats mélangés à un liant bitumineux. Compte tenu des ressources pétrolières limitées de la planète et du renchérissement croissant du prix du pétrole, ces plaques ou ces fraisats d'enrobés constituent une nouvelle source de matériaux de valeur qu'il conviendrait de recycler. De plus, ces matériaux s'ils ne sont pas recyclés doivent être stockés dans des décharges. Cela a un coût, et les capacités de ces décharges sont limitées. Ainsi, pour des raisons économiques et pour des raisons d'ordre écologique, il devient de plus en plus habile et urgent de vouloir récupérer ces matériaux lors de la réfection ou de la démolition des routes. Or si cette récupération ne pose a priori aucun problème, il est par contre nécessaire de trouver de nouvelles applications dans lesquelles les composés de ces déchets peuvent être réutilisés.

Une des solutions est suggérée dans le document FR2609653, lequel présente un procédé de recyclage de déchets bitumineux. L'invention divulguée dans ce document vise à reconstituer un béton bitumineux à partir de croûtes de béton bitumineux usagé, préalablement formé d'enrobés à chaud, dont le liant est oxydé.

Une autre solution est donnée dans le document FR2625519, lequel se soucie du gisement énorme d'agrégats d'enrobés que représente l'ensemble d'un réseau routier. Le stockage de ces agrégats pouvant devenir vite très important, il convenait donc de trouver une solution au recyclage de ces matériaux de démolition. A cette fin, ce document divulgue un dispositif de régénération des chaussées bitumineuses par recyclage d'une partie du revêtement existant. Ce dispositif a l'avantage de pouvoir effectuer un retraitement in situ des enrobés, évitant ainsi leur le transport et leur stockage.

Cependant, lorsque la démolition d'une route a pour but la modification de son tracé ou sa suppression, le transport et le stockage des matériaux récupérés deviennent inévitables. Les nouveaux bétons bitumineux réalisés à partir d'agrégats recyclés nécessitent tous l'apport d'une partie d'agrégats neufs afin de répondre à certaines exigences minimales en matière de résistance mécanique. Ainsi, le stockage de ces matériaux de démolition devient inévitable si l'on recherche à vouloir les réutiliser.

Le but de la présente invention vise à apporter une nouvelle solution au problème soulevé et à remédier au moins en partie aux inconvénients précités. Pour ce faire, il est suggéré une gamme de bétons hydrauliques qui, d'une part présente des caractéristiques mécaniques suffisantes pour être exploitable dans une pluralité d'utilisations et, d'autre part soit respectueuse de l'environnement et du cycle écologique qu'il convient de préserver.

Un autre but de la présente invention vise à proposer un béton qui réponde aux dispositions légales en matière de composés de béton recyclé et soit conforme aux recommandations des associations professionnelles de la branche ainsi qu'aux normes suisses actuellement en vigueur, par exemple.

Ces buts sont atteints grâce à la présente invention qui a pour objet un béton hydraulique dont la composition des granulats comprend des agrégats bitumineux, préférentiellement des agrégats bitumineux issus de matériaux de démolition tels que plaques concassées ou des fraisats d'enrobés.

L'invention sera mieux comprise à l'étude de la description qui va suivre et qui mettra en lumière d'autres buts, avantages et indices liés à l'objet de la présente invention. Celle-ci sera décrite dans un mode de réalisation préféré, pris à titre nullement limitatif, en conformité avec l'énoncé de la revendication 1.

D'un point de vue terminologique, on comprendra que le terme "granulats" définit l'ensemble des constituants dits inertes des mortiers, des enrobés et des bétons. Le terme "agrégat" se réfère quant à lui à la masse formée par les granulats, primitivement distincts, unis intimement et solidement entre eux par un liant pour réaliser le béton recherché. Enfin, le terme "enrobé" définit un granulat recouvert de bitume ou d'un liant bitumineux.

La recherche dans le domaine du recyclage des bétons est active et évolue de pair avec la réglementation. Cette dernière se soucie essentiellement des facteurs écologiques et des atteintes portées à la santé de l'homme. En matière de normes, les normes suisses SN 670 141 et 670 142 actuellement en vigueur se réfèrent au recyclage de matériaux bitumineux de démolition et définissent la quantité d'enrobés que l'on peut mettre dans de la grave, laquelle constitue le matériau de remblayage utilisé pour réaliser le corps de chaussée d'une route ou plus généralement toutes sortes de remblais. Pour des questions de protections de l'environnement, telles qu'expliquées plus en détail ci-après, cette quantité a été limitée à 20% de granulats bitumineux si la somme des granulats de stabilisation et de béton est inférieure à 4% (grave de recyclage A selon art. C8 SN 670 142). Si la somme des granulats de stabilisation et de béton est comprise entre 4% et 20%, le pourcentage de granulats bitumineux doit être inférieur à 4% (grave de recyclage B selon art. C8 SN 670 142). Ce même article préconise le type de grave de recyclage pouvant être utilisé pour réaliser des bétons. Seules les graves de recyclage de type P ou B contenant moins de 4% de granulats bitumineux le sont.

La norme suisse relative au béton de recyclage non classé SN 562 162/4 (SIA 162/4) définit "la proportion maximale de matières étrangères contenues dans le granulat recyclé". Elle fixe cette limite maximale à 7% de la masse des granulats recyclés pour les granulats bitumineux et 0,5% de cette même masse (ou 2% du volume des granulats recyclés) pour les autres impuretés (bois, matières synthétiques, plâtre).

Les normes suisses évoquées ci-dessus tant pour le béton de recyclage que pour la grave recyclée ne définissent donc pas la quantité d'enrobés que l'on pourrait incorporer dans un béton. Elles considèrent les granulats bitumineux comme une impureté qui pourrait se retrouver dans les agrégats recyclés au même titre que le bois, le plâtre ou le plastique. Une des raisons qui permet d'expliquer pourquoi cette norme se réfère à la grave et non au béton, découle du simple fait qu'aucun intérêt apparent ne visait jusqu'à présent à réaliser un béton hydraulique à partir d'enrobés bitumineux.

Une autre raison se réfère à l'objectif premier de cette norme. Cette dernière a en effet été édictée dans le but de limiter la production d'une substance polluante résultant de la percolation de l'eau au travers d'un mélange formé de résidus de béton bitumineux et de résidus de béton de ciment. A son origine, il a été constaté que les constituants solubles extraits des résidus par l'eau de percolation forment un lixiviat dont le degré de pollution est défini par la teneur en hydrocarbure aromatique polycyclique (HAP), en métaux lourds et autres composés organiques. Or, ce lixiviat est un composé volatile qui est cancérogène lorsqu'il se trouve à trop forte dose. A noter que ce percolat peut être extrait de tous les enrobés bitumineux.

En Suisse, la teneur en HAP d'un enrobé est réglementée selon trois plages de valeurs croissantes variant d'un degré de pollution faible, puis modéré, jusqu'à un degré élevé de pollution. La première plage est définie par une teneur en HAP < 5'000 mg/kg. Les directives et recommandations fédérales suisses de l'OFEFP (l'Office fédéral de l'environnement, des forêts et du paysage) et genevoises du Service cantonal de gestion des déchets stipulent que les enrobés dont la teneur en HAP est inférieure à cette valeur peuvent être utilisés comme matériaux de recyclage dans des bétons bitumineux. La plage supérieure est celle qui est définie par une teneur en HAP comprise entre 5'000 et 20'000 mg/kg. Au-dessus de cette valeur supérieure, les déchets doivent être entreposés dans des décharges contrôlées dans lesquels le lixiviat est récupéré pour éviter toute pollution du site d'entreposage.

Aussi, les dispositions de la norme suisse SN 670 141 mentionnent notamment que les granulats bitumineux ne doivent généralement pas être stabilisés aux liants hydrauliques, car les substances polluantes pour l'eau (par exemple le phénol, l'émulseur et d'autres substances organiques) contenues dans le liant bitumineux sont dissoutes par les eaux et rendent la récupération plus difficile.

Comme déjà mentionné, les bétons bitumineux sont largement répandus pour la construction des routes et chaussées mais ne sont pas utilisés dans le domaine de la construction de bâtiments ou d'ouvrages d'art tels que ceux du génie civil. En ajoutant à ce fait les dispositions réglementaires édictées par la norme précitée, nul indice ne permet à l'homme du métier de tenter la mesure de la teneur en HAP d'un béton de ciment comprenant des agrégats bitumineux. Or, contre toute attente, il a été constaté que le mélange de résidus de béton bitumineux et de béton de ciment dans un liant hydraulique ne produisait pas l'effet polluant escompté. Ce résultat surprenant l'était d'autant plus qu'il allait à l'encontre d'un préjugé selon lequel un tel mélange altérait le goût de l'eau. Ce préjugé avait pour origine un fait constaté lors d'une fuite d'hydrocarbures à proximité d'une conduite d'eau potable en polyéthylène.

Le béton de la présente invention est constitué de granulats de granulométrie étagée ou continue, mélangés à un liant hydraulique. Il se caractérise par le fait que la composition des granulats comprend des agrégats bitumineux. Les proportions variables de ces agrégats bitumineux, par rapport à la masse totale de granulats, définissent la gamme de bétons de la présente invention. Ces proportions variant entre des taux de 7% et de 95%. On remarquera que les valeurs de cette plage sont toutes supérieures à la valeur limite de 7% édictée par la norme suisse SN 562 162/4 (SIA 162/4), à laquelle doit légalement se conformer l'homme du métier.

L'Ordonnance fédérale sur les sites contaminés (Osites) définit une procédure pour des essais de lixiviation ainsi que des valeurs limites pour la concentration en métaux lourds, en paramètres organiques, en phénols et composés nitrés, en hydrocarbures poly-aromatiques (HAP) et en composés organiques volatiles. Les analyses et essais de lixiviation en colonne d'une gamme de bétons conformes à la présente invention ont montrés que les teneurs en métaux lourds, en paramètres organiques, en phénols et composés nitrés, en hydrocarbures poly-aromatiques (HAP) et en composés organiques volatiles des échantillons de béton testés étaient toutes inférieures aux valeurs de concentration indiquées dans la législation en vigueur (Ordonnance sur l'assainissement des sites pollués) et quasiment toutes inférieures à la limite de quantification de cette ordonnance. Ces valeurs servant à quantifier l'évaluation des atteintes d'un polluant, cela signifiait en d'autres termes que le matériau peut être considéré comme non polluant et ne nécessite pas un traitement spécifique.

Selon une première variante, les granulats du béton de la présente invention se composent en partie d'agrégats bitumineux et en partie d'agrégats de béton hydraulique, par exemple à proportions égales, à raison d'un tiers/deux tiers ou un quart/trois quarts.

Selon une autre variante, les granulats se composent en partie d'agrégats bitumineux et en partie de grave naturelle.

Selon une troisième variante, les granulats se composent en partie d'agrégats bitumineux, d'agrégats de béton hydraulique et de grave naturelle par exemple à proportions égales, à raison d'un tiers/deux tiers ou un quart/trois quarts.

Les proportions des différents agrégats dépendent essentiellement du but et de l'ouvrage pour lequel le béton en question sera réalisé.

Vu que la proportion d'agrégats bitumineux relativement à la masse totale de granulats du béton permet notamment de faire varier les caractéristiques liées à la résistance à la compression du béton, l'ouvrabilité du béton, à savoir le degré de plasticité et de facilité de mise en oeuvre du béton frais, s'en trouve également affectée. Ainsi, si le dosage d'agrégats bitumineux augmente, on obtiendra un produit plus élastique, moins résistant à la compression et doté d'un retrait inférieur.

Le liant hydraulique du béton de la présente invention se compose essentiellement d'eau et de ciment dans un rapport de masses respectives (e/c) compris entre 0.2 et 0.8. Le rapport e/c influence directement la structure capillaire du ciment hydraté et de ce fait modifie la qualité du béton obtenu. Lors de la cure du béton, le retrait est également influencé par ce même facteur.

Le ciment utilisé est préférentiellement un ciment de type Portland (CP) dosé dans une proportion comprise entre 100 et 600 kg/m³ de béton. La quantité variable de ciment permet notamment d'obtenir trois types de bétons différents, à savoir des bétons moyens, des bétons maigres et des bétons gras. L'invention n'exclu toutefois pas la réalisation d'un tel béton à partir d'autres types de ciments ou d'un autre type de liant hydraulique comme une pâte composée essentiellement de chaux et d'eau par exemple. En lieu et place de la chaux, on pourrait également utiliser tout autre composé d'origine minérale.

Avantageusement, les agrégats bitumineux seront issus de matériaux de démolition. De tels matériaux peuvent être des fraisats de revêtements routiers, des plaques de revêtements concassés ou tout autres fraisats de planage comportant un composé bitumineux. Ce genre de matériaux de récupération peut en outre être avantageusement conditionné sous une forme concassée.

Avantageusement encore, les agrégats de béton hydraulique utilisés dans la composition des granulats des différentes variantes de la présente invention seront issus d'un béton recyclé.

L'utilisation de matériaux bitumineux de recyclage possède un fort impact écologique et permet notamment de valoriser les déchets de chantier. Cette valorisation va avantageusement contribuer à la diminution du nombre de décharges et de leur tonnage. D'autre part, l'utilisation de ces déchets contribue de manière significative à préserver les valeurs des ressources naturelles. Cependant, l'objet de la présente invention ne se limite pas à l'utilisation de tels matériaux de récupération. Il convient donc de comprendre que l'invention vise également la réalisation d'un béton hydraulique à partir d'enrobés neufs par exemple. Les buts écologiques visés par cette invention n'en seraient dans ce cas pas pour autant limités du fait que les analyses ont montrés qu'aucune pollution ne découlait de l'incorporation d'agrégats bitumineux dans un liant hydraulique pour en faire du béton, contrairement à tout préjugé.

La composition de l'objet de la présente invention n'exclut pas non plus l'incorporation d'une pluralité d'adjuvants ou d'additifs pour en améliorer certaines propriétés.

L'homogénéité du béton sera fonction du temps de malaxage, du type de silo et du type de centrale utilisés. Avantageusement, le malaxage de la gamme de bétons de la présente invention peut se faire dans une centrale conventionnelle dite mixte à silos horizontaux. Ce genre de centrale mixte à la particularité de convenir aussi bien pour le malaxage des bétons bitumineux que pour celui des bétons hydrauliques. Les silos horizontaux évitent l'agrégation des granulats bitumineux et un sur-compactage dû aux effets conjugués de la température et du poids propre des matériaux. Les installations existantes de ce type peuvent donc être parfaitement utilisées sans devoir investir dans une nouvelle installation spécifique pour la réalisation du béton de la présente invention. Un autre type de centrale pourrait éventuellement convenir.

Préférentiellement, le béton de la présente invention fait partie des bétons dits non classés. De ce fait, le produit obtenu ne sera grevé d'aucune obligation sur le résultat. Seule la composition du béton pourra être garantie contrairement à sa résistance mécanique à la compression qui elle ne le sera pas.

On notera enfin que l'utilisation du terme béton aurait pu être remplacé par le terme mortier sans incidence sur l'objet de la présente invention. En effet, les termes béton et mortier ne se différentient que par la granulométrie des plus gros grains qui les composent. Pour le béton, ces derniers sont simplement définis comme étant supérieurs à 8 mm alors qu'ils sont inférieurs à cette valeur pour les mortiers.

## Revendications

1. Béton constitué de granulats, de granulométrie étagée ou continue, mélangés à un liant hydraulique, **caractérisé en ce que** la composition desdits granulats comprend des agrégats bitumineux.

2. Béton selon la revendication 1, **caractérisé en ce que** les granulats se composent en partie d'agrégats bitumineux et en partie d'agrégats de béton hydraulique.

3. Béton selon la revendication 1, **caractérisé en ce que** les granulats se composent en partie d'agrégats bitumineux et en partie de grave naturelle.

4. Béton selon la revendication 1, **caractérisé en ce que** les granulats se composent en partie d'agrégats bitumineux, d'agrégats de béton hydraulique et de grave naturelle.

5. Béton selon la revendication 1, 2, 3 ou 4, **caractérisé en ce que** lesdits agrégats bitumineux représentent un taux compris entre 7% et 95% de la masse totale de granulats.

6. Béton selon l'une la revendication 1, **caractérisé en ce que** le liant hydraulique se compose essentiellement d'eau et de ciment dans un rapport de masses respectives compris entre 0.2 et 0.8, et **en ce que** le ciment est dosé dans une proportion comprise entre 100 et 600 kg/m³ de béton.

7. Béton selon la revendication 1, **caractérisé en ce que** le liant hydraulique se compose essentiellement d'eau et de chaux.

8. Béton selon l'une des revendications 1 à 5, **caractérisé en ce que** lesdits agrégats bitumineux sont issus de matériaux de démolition.

9. Béton selon la revendication 8, **caractérisé en ce que** lesdits matériaux de démolition sont des plaques concassées ou des fraisats de revêtements routiers bitumineux.

10. Béton selon la revendication 2 ou 4, **caractérisé en ce que** lesdits agrégats de béton hydraulique sont issus d'un béton recyclé.
